Europäisches Patentamt

European Patent Office

Office européen des brevets

(19)

(11) Numéro de publication : **0 033 306**
**B1**

(12) **FASCICULE DE BREVET EUROPÉEN**

(45) Date de publication du fascicule du brevet :
28.08.85

(51) Int. Cl.⁴ : **H 04 N   7/13, H 04 N 11/04**

(21) Numéro de dépôt : **81870009.8**

(22) Date de dépôt : **21.01.81**

(54) **Procédé et installation de transmission de signaux de télévision par l'intermédiaire d'un codage numérique de ces signaux.**

(30) Priorité : **22.01.80 EP 80870005**

(43) Date de publication de la demande :
**05.08.81 Bulletin 81/31**

(45) Mention de la délivrance du brevet :
**28.08.85 Bulletin 85/35**

(84) Etats contractants désignés :
**AT BE CH DE FR GB IT LI LU NL SE**

(56) Documents cités :
DE-A- 1 931 923
FR-A- 2 113 933
US-A- 3 026 375
US-A- 3 073 896
IEEE TRANSACTIONS ON COMMUNICATIONS vol. COM-26, no. 10, octobre 1978 New York, US K. SAWADA et al.: "32 Mbits/s Transmission of NTSC Color TV Signals by Composite DPCM Coding", pages 1432-1439
RUNDFUNKTECHNISCHE MITTEILUNGEN, vol. 20, no. 6, décembre 1976, Hamburg, DE J. HEITMANN: "Ein sytemkompatibles digitales Farbfernsehsignal", pages 236-241
FUJITSU, vol. 10, no. 3, septembre 1974, Kawasaki, JP M. ISHI: "Picture Bandwidth Compression by DPCM in the Hadamard Transform Domain", pages 51-65
IEEE TRANSACTIONS ON COMMUNICATIONS vol. COM-25, no. 11, novembre 1977 New York, US J.O. LIMB et al.: "Digital Coding of Color video signals-a review", pages 1349-1384

(73) Titulaire : **Delogne, Paul Pierre**
**Avenue du 11e Zouaves, No. 33**
**B-1342 Limelette (BE)**

(72) Inventeur : **Delogne, Paul Pierre**
**Avenue du 11e Zouaves, No. 33**
**B-1342 Limelette (BE)**

(74) Mandataire : **Bossard, Franz et al**
**ACEC - Service des Brevets Boîte Postale 4**
**B-6000 Charleroi (BE)**

Jouve, 18, rue St-Denis, 75001 Paris, France

# 0 033 306

**Description**

Des procédés de transmission de signaux de télévision par l'intermédiaire d'un codage numérique de ces signaux sont en principe connus, bien que, jusqu'à présent, le codage numérique n'est pas utilisé dans la télévision à usage public. Dans de tels procédés connus, par exemple celui décrit dans le brevet US-A-3 026 375, un signal de télévision analogique original est constitué par des signaux de lignes, de trames et d'images dont chacun comprend des parties consacrées à des signaux de servitude tels des impulsions de synchronisation et d'égalisation et des salves de sous-porteuse de couleur et des parties consacrées à la transmission de l'information d'image proprement dite, le codage numérique du signal de télévision étant réalisé à la cadence d'une fréquence d'échantillonnage, codage et cadence pouvant être différents pour les signaux des composants de luminance et des composants de différence de couleur.

L'évolution actuelle des télécommunications va dans le sens de la transmission numérique des signaux, quelle que soit leur nature. En ce qui concerne la télévision, cette évolution est freinée par la vitesse de transmission extrêmement élevée qui est requise, ainsi d'ailleurs que par l'existence de différents systèmes analogiques de télévision (ou normes) et par la conception même de ceux-ci. De nombreuses recherches ont été effectuées au cours des dernières années afin de réduire cette vitesse de transmission. Elles ont le plus souvent été fondées sur la réduction de la redondance intrinsèque des images. Bien que certaines de ces méthodes aient conduit à des résultats intéressants, voire spectaculaires, elles ne sont pas entrées dans la pratique parce qu'elles requièrent un traitement du signal qui est fort complexe et reste coûteux, malgré les progrès rapides de la technologie numérique. En outre, certaines d'entre elles ne sont pas applicables à tous les systèmes analogiques de télévision. Il est donc du plus haut intérêt de concevoir un système de codage et de traitement numérique du signal de télévision qui, tout en conduisant à des vitesses de transmission aussi faibles que possible, soit applicable à la plupart des systèmes analogiques de télévision, voire à tous, et soit d'une complexité et d'un coût acceptables éventuellement jusqu'au niveau du récepteur individuel. A long terme d'ailleurs, ceci éviterait que ne se reproduise dans le domaine de la transmission numérique, la prolifération de systèmes différents dont a souffert la transmission analogique.

Par ailleurs la conception des systèmes analogiques de télévision est assez ancienne et a été fortement influencée d'une part par la technologie de l'époque et, d'autre part, par le souci de simplifier au maximum les récepteurs individuels. L'évolution de ces systèmes, notamment à l'occasion de l'introduction de la télévision en couleurs, a été soumise à des contraintes de comptabilité avec les équipements existants. Il s'ensuit que les signaux de télévision analogiques actuels comprennent un certain nombre d'éléments et de composantes dont la présence n'est pas nécessaire à la transmission numérique. Pour cette transmission numérique, on a déjà proposé par exemple dans le brevet US A 3 026 375 de supprimer ou de réduire les signaux de synchronisation de ligne et d'étaler l'information relative à la partie active de la ligne sur la totalité ou sur une partie de l'intervalle de suppression de ligne, mais cette idée mérite d'être étendue et généralisée. Le but d'un telle généralisation est d'éviter la transmission de composantes encombrantes ou de réduire au maximum la quantité d'informations à transmettre, soit par la réduction de la redondance, soit par des limitations de la quantification soit en remplaçant la transmission de signaux de servitude par celle d'un mot de synchronisation permettant de reconstruire ces signaux à la réception. Il est connu aussi, par exemple par IEEE Transactions ou Communications Vol. COM-25 n° 10 (1978. 10), de réduire la vitesse de transmission en étalant les signaux numériques à transmettre aussi sur le temps consacré à de l'information non transmise dans le signal original.

L'invention a pour but de réduire davantage la quantité d'informations à transmettre dans un système de transmission numérique de signaux de télévision, notamment en sacrifiant une définition verticale de l'image inutilement grande.

Le procédé suivant l'invention est caractérisé en ce que dans chaque trame, on subdivise les lignes du signal de télévision original comprenant l'information d'image proprement dite en blocs initiaux de lignes consécutives chacun d'un nombre m prédéterminé de lignes, qu'on opère une interpolation verticale sur l'information d'image codée des m lignes de chaque bloc pour en déduire des blocs de lignes résultantes dont le nombre n de lignes est inférieur au nombre m de lignes des blocs initiaux, qu'on transmet l'information d'image codée de ces n lignes résultantes étalées sur les mêmes temps totaux initialement réservés aux blocs de m lignes, et qu'on reconstitue à la réception, une information d'image répartie sur des blocs d'un nombre m de lignes égal à celui des blocs initiaux.

L'invention est expliquée ci-dessous par rapport à un exemple d'une forme d'exécution, avec rappel à quelques variantes et en se référant au dessin annexé. Sur ce dessin, la figure 1 est un schéma d'échantillonnage en vue d'un codage numérique de l'information d'image proprement dite ; les figures 2 et 3 sont des schémas blocs de parties d'une installation permettant de réaliser le procédé selon l'invention.

Dans ce qui suit, le procédé suivant l'invention est décrit pour un système à 625 lignes. Il va de soi que ce procédé n'est pas limité à de tels systèmes et qu'il est applicable aussi, notamment, à un système à 525 lignes.

Les différents systèmes de télévision analogique, aussi appelés normes, utilisés de par le monde sont décrits dans le Rapport 624-1 du CCIR. Tous les systèmes présentent les caractéristiques suivantes :

# 0 033 306

1. La synchronisation du balayage de l'image se fait par des impulsions occupant la plage de tension distincte de celle réservée aux signaux porteurs d'information d'image proprement dite. Le rapport signal d'image/signal de synchronisation est voisin de 7/3, valeur recommandée par l'Avis 472-1 du CCIR pour les échanges internationaux des programmes entre les pays qui ont adopté des systèmes à 625 lignes.

2. Dans chaque ligne, un intervalle de suppression de ligne, environ 18 % de la durée de la ligne, est consacré à des signaux de servitude (impulsion de synchronisation, salve de la sous-porteuse de couleur) et environ 82 % forme la partie active de la ligne au cours de laquelle est transmise l'information d'image proprement dite.

3. Les images sont transmises en deux trames. Plusieurs lignes au début et à la fin de chaque trame constituent un intervalle de suppression de trame et sont également consacrées à la transmission de signaux de servitude et au retour vertical du spot et seulement un certain nombre de lignes, que nous appellerons actives, contiennent l'information d'image proprement dite.

Ainsi, dans les systèmes à 625 lignes, 575 lignes sont actives et, alors que leur durée nominale est de 64 µs, elles ne le sont réellement que pendant 52 µs. La partie active du signal d'image ou signal vidéo n'occupe donc que 74,8 % du temps de transmission ; le restant est utilisé à la transmission de signaux de servitude liés au balayage du tube d'image. Ces derniers ne sont pas transmis, mais reconstruits à l'extrémité réceptrice, ce qui offre la possibilité d'une réduction de la vitesse de transmission de l'ordre de 25 %. Une réduction supplémentaire résulte du fait que le codage du signal composite peut être limité à la plage de tension occupée par le signal d'image proprement dit et ne doit pas s'étendre à celle réservée aux signaux de servitude (impulsions de synchronisation et d'égalisation) non transmis.

Toutefois, il faut tenir compte de ce que des signaux spéciaux, par exemple, signaux d'insertion destinés à la mesure, sont de plus en plus fréquemment insérés dans une partie des 50 lignes non actives qui ne contiennent pas de signaux de servitude. L'Avis 472-1 déjà cité du CCIR recommande que ces signaux spéciaux soient insérés dans six lignes consécutives bien déterminée de chaque trame, à savoir les lignes 16 à 21 et 329 à 334. Dans le système selon l'invention, l'information spéciale contenue dans ces six lignes non actives est toutefois transmise.

Un signal de télévision en couleurs, délivré par exemple par un enregistreur vidéo ou, en l'occurrence, une caméra CA, se compose d'un signal de luminance, noté Y, et de deux signaux de différence de couleur, notés U et V. Dans les systèmes de transmission de télévision analogique, ces composantes U, V modulent une sous-porteuse dite de chrominance, située dans la bande de fréquences occupées par la luminance, et plus exactement dans le haut de cette bande. Historiquement, cette méthode a été justifiée par la nécessité de ne pas accroître la bande de fréquence totale et par des impératifs de compatibilité avec les systèmes monochromes existants. Il en résulte des contraintes fort sévères et certaines limitations lorsque l'on désire procéder au codage numérique du signal de télévison analogique composite ainsi obtenu. Ces contraintes portent sur le choix de la fréquence d'échantillonnage qui, du moins dans les systèmes PAL et NTSC, doit être liée de manière stricte à la fréquence de la sous-porteuse de chrominance, notée $f_{sc}$. Le rapport R 629-1 du CCIR, qui donne un excellent état de la question, fait apparaître qu'une fréquence d'échantillonnage égale à $4f_{sc}$ est souhaitable. Une fréquence de $4f_{sc}$ conduit cependant à des vitesses de transmission fort élevées, car elle est nettement supérieure à la fréquence de Nyquist. La fréquence d'échantillonnage du signal composite peut toutefois être réduite à $2f_{sc}$ si une certaine perte de définition de l'image est tolérée. Les limitations du codage du signal composite portent principalement sur la difficulté de lui appliquer de manière efficace des méthodes de traitement du signal exploitant la redondance de celui-ci. Le codage du signal composite ne semble guère avoir été étudié pour le système SECAM.

Le même rapport du CCIR mentionne les résultats obtenus lorsqu'on code séparément les signaux Y, U et V, soit parce que la caméra CA, par exemple, les fournit séparément, soit que le codage est effectué après décomposition du signal composite. Un avantage de cette méthode est que la fréquence d'échantillonnage ne doit pas être liée à la fréquence $f_{sc}$ et ne doit pas être prise à une valeur trop élevée. Les avantages principaux sont toutefois que le codage devient indépendant du mode de modulation de la couleur et qu'il se prête à un traitement réducteur de redondance plus efficace du signal. C'est pourquoi il a été retenu pour la description de l'invention, bien qu'il ne soit pas indispensable à celle-ci. Le choix d'autres composantes que Y, U et V serait du reste compatible avec l'invention.

Dans tout système de transmission numérique, le premier choix à effectuer est celui de la fréquence d'échantillonnage. Dans l'exemple décrit ci-dessous, et bien que cela ne soit pas indispensable à la valeur de celle-ci, ni requis dans le cas d'un codage séparé des composantes Y, U et V, une fréquence d'échantillonnage de la luminance égale à $2f_{sc}$ a été choisie et imposée par une horloge à l'endroit du poste émetteur. La raison principale de ce choix est de favoriser la compatibilité avec les méthodes de codage du signal composite. Une autre raison est de faciliter la reconstitution éventuelle de la sous-porteuse de couleur et la modulation de celle-ci à l'extrémité réceptrice, puisque la vitesse de transmission du signal est liée à $f_{sc}$.

Il convient toutefois de signaler que, même si le signal original était disponible dans le système SECAM, la valeur de $f_{sc}$ recommandée ici est celle du système PAL. Elle est liée à la fréquence de ligne $f_h$ par la relation

$$f_{sc} = (1\,135/4 + 1/625)\, f_h = 4\,433\,618,75\ \text{Hz}$$

3

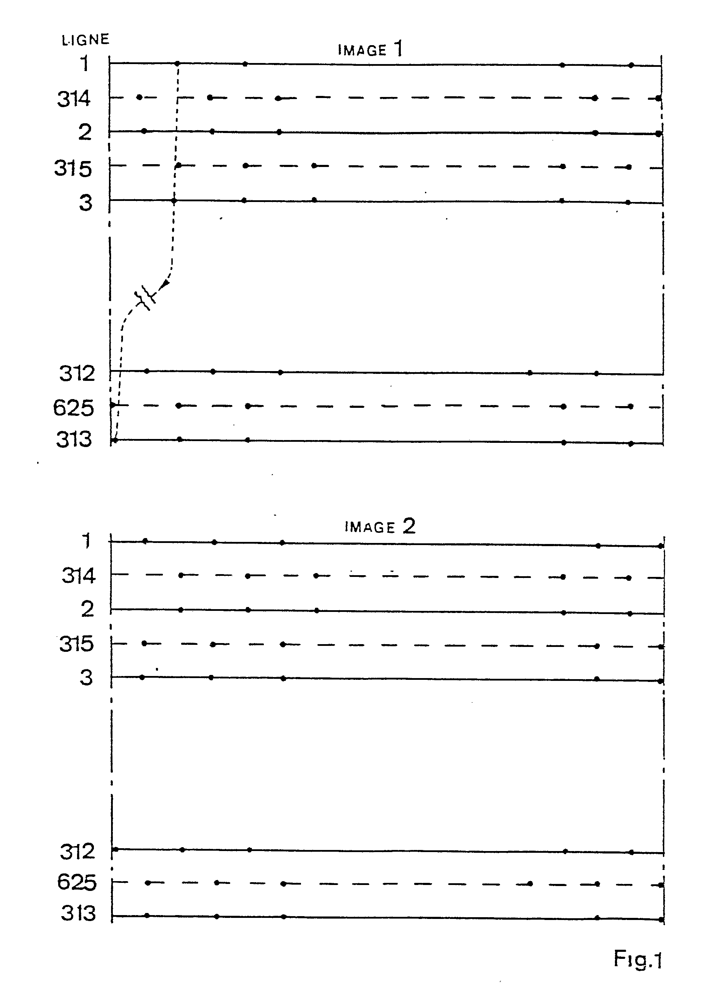

L'utilisation de la fréquence d'échantillonnage $2f_{sc}$ pour le signal Y conduit à la structure d'échantillonnage représentée sur la figure 1. Cette structure se répète toutes les deux images ; les lignes en trait continu sont celles de la première trame et les lignes en trait discontinu sont celles de la seconde trame de chaque image. Les points représentent les instants théoriques d'échantillonnage ; on voit que dans deux lignes successives d'une trame ils sont disposés en quinconce avec un léger décalage latéral indiqué par le trait pointillé. Les quinconces de deux images successives sont inversées. Ceci rend l'effet subjectif de l'échantillonnage proche de celui que l'on obtiendrait avec une fréquence d'échantillonnage égale à $4f_{sc}$.

Des essais mentionnés dans le rapport R 629-1 du CCIR ont montré que la fréquence d'échantillonnage $2f_{sc}$ était suffisante, car une observateur situé à une distance normale de l'écran n'est pas capable de distinguer la structure d'échantillonnage. Ce choix de fréquence permet d'ailleurs de conserver au signal de luminance une bande passante s'étendant jusqu'à $f_{sc} = 4,43$ MHz.

Si la fréquence d'échantillonnage vaut $2f_{sc}$, chaque ligne de 64 µs contient 567,5032 échantillons de luminance dont cependant 461 seulement se trouvent dans la partie active de la ligne. Dans le système selon le présent exemple, seuls ceux-ci doivent être transmis. On peut cependant en transmettre un nombre quelque peu différent, par exemple en débordant légèrement sur la partie non active. Le nombre exact de points transmis peut être choisi en fonction d'autres critères. Ainsi, certaines méthodes de réduction de la redondance parmi les plus efficaces opèrent sur des groupes de 2, de 4 ou de 8 points et il est souhaitable que le nombre de points réellement transmis par ligne soit un multiple de 8. La description sera poursuivie en supposant qu'un échantillonneur-codeur ECY prélève 464 points par ligne, bien que ce nombre ne soit pas essentiel. Ces points sont, à l'extrêmité émettrice, obtenus en 52,3 µs et mis en mémoire, dans une mémoire MEY1 ou MEY2. Ils peuvent être transmis à une cadence réduite, en temps réel, à raison de 64 µs par ligne, via un multiplexeur M, en fonction de signaux de commande émis, par exemple, par l'horloge.

Dans le sytème à 625 lignes, la définition verticale de l'image est supérieure à la définition horizontale, ce qui n'est pas nécessaire. L'invention permet d'éliminer cette définition superflue. Puisque le rapport largeur/hauteur de la partie active de l'image est de 4/3, la définition horizontale de 461 points dans la partie active de la ligne ne requerrait que 346 lignes actives, alors que l'on en transmet 575 dans les systèmes analogiques. Ce nombre, suffisant pour qu'un observateur situé à une distance normale de l'écran ne puisse pas distinguer la structure de lignes de l'image, est exagérément grand du point de vue de la quantité d'information à transmettre. On peut donc procéder à une réduction de la définition verticale, c'est-à-dire du nombre de lignes transmises, pour autant que l'on restitue à l'extrémité réceptrice une image à 575 lignes actives. On peut de cette manière réduire la vitesse de transmission dans une proportion pouvant atteindre 40 %.

La réduction du nombre de lignes actives se fait par interpolation verticale. Il faut cependant tenir compte de ce que certaines des lignes non actives peuvent contenir des signaux spéciaux qu'il faut transmettre sans application d'une interpolation verticale ; en outre, si l'on utilise, en plus de l'interpolation verticale, un traitement de réduction de redondance, celui-ci n'est généralement pas applicable aux signaux spéciaux.

L'ensemble des 625 lignes est subdivisé en deux groupes appelés groupe des lignes actives et groupe des lignes non actives. Le groupe des lignes du signal de télévision composite original comprenant l'information d'image proprement dite, c'est-à-dire les lignes actives, est lui-même subdivisé en blocs de lignes consécutives chacun d'un nombre m prédéterminé de lignes. Sur ces blocs de m lignes, on opère une interpolation verticale sur l'information d'image codée des m lignes de chaque bloc pour en déduire des blocs de lignes résultantes dont le nombre n de lignes est inférieur au nombre m de lignes des blocs initiaux. Ensuite on transmet l'information d'image codée de ces n lignes résultantes et on reconstitue, à la réception, une information d'image répartie sur un nombre m de lignes égal à celui des blocs initiaux. On dispose donc, pour la transmission en temps réel d'un bloc, d'un temps égal à m fois 64 µs. L'interpolation verticale permet de réduire la vitesse de transmission dans un rapport n/m. Comme son seul effet est de réduire la définition verticale sans affecter autrement l'image, elle peut encore éventuellement, dans le cadre de l'invention, être combinée avec un traitement réducteur de redondance à l'émission. A la réception l'information transmise est alors soumise à un traitement inverse qui restitue l'information d'image codée originale. Le traitement réducteur de redondance apporte une réduction de p bits à q bits par point d'image.

Comme ces deux traitements ne peuvent être appliqués aux éventuelles lignes de signaux spéciaux, celles-ci, pour autant qu'elles existent, seront transmises étendues sur l'axe des temps en occupant du temps qui était consacré aux signaux de servitude (synchronisation verticale et égalisation). Dans le cadre de l'invention, un ensemble de s lignes de signaux spéciaux est ainsi rendu équivalent à son bloc de lignes actives, cette équivalence portant sur la durée et sur le nombre de bits. Ceci exige que

$$nq = sp,$$

p étant le nombre de bits initiaux et q le nombre de bits réduit grâce au traitement réducteur de redondance.

Outre qu'il doit être satisfait à cette relation, les nombres m, n, p, q et s doivent être choisis judicieusement en fonction d'un certain nombre de contraintes et de caractéristiques souhaitables :

a) comme l'Avis 472-1 du CCIR impose, pour l'échange international de programmes entre pays utilisant des systèmes à 625 lignes, que les signaux spéciaux éventuels soient émis dans 6 lignes consécutives bien déterminées à chaque trame, s ne peut prendre que les valeurs 1, 2, 3 ou 6 et éventuellement 4.

b) on doit avoir

$$0,6\ 017 = 346/575 < n/m < 1$$

afin de ne pas réduire la définition verticale à une valeur inférieure à la définition horizontale, mais il est souhaitable que n/m soit proche de sa limite inférieure.

c) comme on le verra plus loin, l'application de l'interpolation verticale aux signaux de différence de couleur exige que m et n soient pairs.

d) l'interpolation verticale suppose, à l'extrémité émettrice, la mise en mémoire de blocs de m lignes du signal original. De même, il faut, à l'extrémité réceptrice, mettre en mémoire des blocs de n lignes correspondants afin de procéder à l'opération inverse de l'interpolation et de revenir ainsi à un système à 625 lignes. Il est souhaitable, pour que la taille de ces mémoires ne soit pas excessive, que m et n soient petits.

e) l'application d'un traitement réducteur de redondance, sans être obligatoire, doit être rendu possible. Comme on l'explicitera plus loin, l'existence des mémoires requises par l'interpolation verticale rend possible un traitement bidimensionnel, réducteur de redondance, sans que l'on doive faire appel à de nouvelles mémoires et l'on verra que l'interpolation verticale et ce traitement peuvent aisément être combinés en une seule opération. La plupart des traitements bidimensionnels connus et efficaces sont des transformations linéaires qui doivent suivre — et ne peuvent précéder — l'interpolation verticale. Ces transformations, qui se font sur des carrés de (k × k) points, k étant de préfrence une puissance de 2, deviennent particulièrement aisés à exécuter, si k = n pour la luminance et k = n/2 pour les signaux de différence de couleur.

Par ailleurs, il serait souhaitable que plusieurs degrés de réduction de redondance p/q soient possibles,

f) la conversion analogique-numérique des signaux de luminance se fait dans l'échantillonneur ECY, avec p = 6, 7 ou 8 bits afin d'avoir un rapport signal/bruit de quantification adéquat.

La réunion de toutes ces conditions n'est obtenue que pour m = 6 et n = 4, ce qui est utilisé dans la version principale de l'invention.

Les valeurs possibles de s et les valeurs correspondantes de p et q, ainsi que le rapport de réduction de la vitesse de transmission (mp)/(nq) résultant de la combinaison interpolation-traitement de redondance sont les suivantes :

s = 1 ; p = 8 ; q = 2 ; (mp)/(nq) = 6
s = 2 ; p = 6 ; q = 3 ; (mp)/(nq) = 3
        p = 8 ; q = 4 ; (mp)/(nq) = 3
s = 3 ; p = 8 ; q = 6 ; (mp)/(nq) = 2
s = 4 ; p = q (quelconques) ; (mp)/(nq) = 1,5

Une variante consiste à prendre m = 8 et n = 6 ; elle est moins performante, car le rapport n/m est moins proche de sa limite inférieure. En outre, elle se prête moins bien aux traitements réducteurs de redondance, car n n'est pas une puissance de 2. Cette variante permet les combinaisons suivantes :

s = 1 ; p = 6 ; q = 1 ; (mp)/(nq) = 9
s = 2 ; p = 6 ; q = 2 ; (mp)/(nq) = 4,5
s = 3 ; p = 6 ; q = 3 ; (mp)/(nq) = 3
        p = 8 ; q = 4 ; (mp)/(nq) = 3
s = 4 ; p = 6 ; q = 4 ; (mp)/(nq) = 2,25
s = 6 ; p = q (quelconques) ; (mp)/(nq) : 1,5

Les contraintes relatives à la valeur de s disparaissent, si le signal original ne comporte pas de signaux spéciaux. La relation s = nq/p n'étant pas applicable, il n'est alors q plus exigé que le rapport nq/p soit en entier. Les valeurs citées précédemment pour n et m seront alors conservées, mais p et q pourraient être quelconques.

Il est clair que l'on peut, dans le cadre de l'invention, pour la version principale et pour la variante, multiplier m, n et s par un même nombre entier pour accroître la taille des carrés auxquels on applique le traitement réducteur de redondance ou pour augmenter la valeur de s en gardant les mêmes valeurs de p et q.

La description de l'invention sera poursuivie pour la version principale (m = 6, n = 4) seulement, car il est aisé de l'adapter à la variante. Tant pour la version principale que pour la variante, le nombre de lignes du groupe des lignes actives doit être un multiple de m. Dans les deux cas, cette condition est remplie si

5

les 625 lignes de l'image sont réparties en 49 lignes non actives et 576 lignes actives. On inclut donc dans le groupe de celles-ci une des lignes non actives (ne comprenant pas de signaux spéciaux) ; elle sera traitée comme si elle était active.

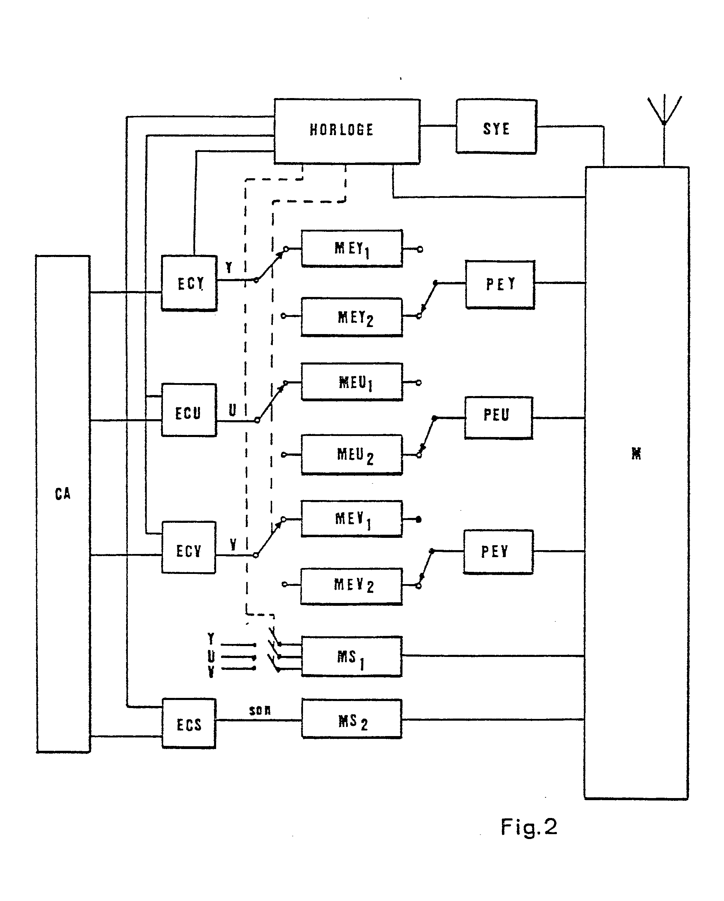

Considérons d'abord le traitement et la transmission du groupe des lignes actives, et en premier lieu de leur luminance. Comme on l'a vu, ce groupe est divisé en 96 blocs de m = 6 lignes. A l'extrémité émettrice (figure 2), un bloc d'échantillons de luminance de 6 lignes consécutives, délivrés par un transformateur analogique digital, en l'occurrence l'échantillonneur ECY, comprend des échantillons en 6 intervalles disjoints de 52,3 µs qui sont rangés dans une première mémoire temporaire MEY 1. Pendant le temps d'enregistrement des échantillons d'un tel bloc, un processeur PEY lit dans une deuxième mémoire temporaire MEY 2 les points du bloc précédent, leur applique l'interpolation verticale et le traitement réducteur de redondance, et les émet via un multiplexeur M. Toutes les $6 \times 64 = 384$ µs, le rôle des mémoires MEY 1 et MEY 2 est inversé sur commande de l'horloge.

Mathématiquement, l'opération d'interpolation verticale effectuée par le processeur PEY peut être décrite de la manière suivante : soient $X_6$ une matrice-colonne constituée des luminances de 6 points pris sur une même verticale dans un bloc entrant et $X_4$ une matrice-colonne des luminances des 4 points dans lesquels ils sont transformés. L'interpolation consiste dans la multiplication

$$X_4 = P_y X_6$$

où $P_y$ est la matrice d'interpolation verticale, de dimension $4 \times 6$. La matrice d'interpolation recommandée est, au facteur de normalisation près :

$$P_y = \left(\begin{array}{ccc:ccc} 2 & 1 & 0 & 0 & 0 & 0 \\ 0 & 1 & 2 & 0 & 0 & 0 \\ \hdashline 0 & 0 & 0 & 2 & 1 & 0 \\ 0 & 0 & 0 & 0 & 1 & 2 \end{array}\right)$$

Comme le montre la subdivision faite par les pointillés, il s'agit en fait de deux transformations de 3 lignes en deux lignes. Le groupement en blocs de 6 lignes plutôt qu'en blocs de 3 lignes est cependant avantageux en vue du traitement des signaux de la couleur, comme on le verra plus loin.

Le processeur PEY peut également effectuer un traitement réducteur de redondance qui peut, selon l'invention, être combiné en une seule opération avec l'interpolation verticale. Les transformations linéaires bidimensionnelles opérant sur des carrés de $4 \times 4$ points sont particulièrement intéressantes dans ce but. En effet, la transformation dans le sens vertical revient à la multiplication de $X_4$ par une matrice $H_y$ à 4 lignes et 4 colonnes. La combinaison consiste à multiplier directement $X_6$ par la matrice produit $H_y P_y$. L'utilisation de la transformation de Hadamard, pour laquelle

$$H_y = \frac{1}{2}\left(\begin{array}{cc:cc} 1 & 1 & 1 & 1 \\ 1 & -1 & 1 & -1 \\ \hdashline 1 & 1 & -1 & -1 \\ 1 & -1 & -1 & 1 \end{array}\right)$$

est particulièrement bien adaptée, car elle conduit à la matrice produit

$$H_y P_y = \left(\begin{array}{ccc:ccc} 1 & 1 & 1 & 1 & 1 & 1 \\ 1 & 0 & -1 & 1 & 0 & -1 \\ \hdashline 1 & 1 & 1 & -1 & -1 & -1 \\ 1 & 0 & -1 & -1 & 0 & 1 \end{array}\right)$$

pour laquelle les opérations du processeur sont extrêmement simples. On remarquera la subdivision en 4 sous-matrices égales au signe près.

Considérons ensuite la transmission de la couleur. Etant donné que, d'une part, les signaux de différence de couleur U et V ont des fréquences ne dépassant pas 2 MHz environ dans les systèmes à 625 lignes et que d'autre part, la simplicité exige que la fréquence d'échantillonnage de ces signaux dans les échantillonneurs ECU et ECV soit en rapport simple avec celle (2 fsc) de la luminance ; elle est prise égale à fsc, imposée également par l'horloge. Ce choix est fait dans l'optique d'une compatibilité avec les méthodes de codage du signal composite. La définition horizontale ainsi obtenue pour chacun des signaux U et V est la moitié de celle de la luminance et cette propriété sera maintenue pour le sens vertical. On pourrait envisager, dans le système PAL, que les 6 lignes de chacun des signaux et V formant un bloc soient transformées par interpolation verticale en 2 lignes. On pourrait aussi, ce qui serait plus simple au point de vue de l'interpolation, prélever les échantillons de U et V sur seulement 3 des 6 lignes (les mêmes pour U et V), par exemple les lignes (1, 3, 5). Toutefois, dans le système SECAM, on ne transmet pendant chaque ligne de 64 $\mu$s, alternativement de ligne à ligne, qu'un seul des signaux U et V. Il est donc préférable que l'interpolation verticale selon l'invention porte sur 3 lignes d'échantillons U et 3 lignes d'échantillons V correspondant, les unes aux lignes paires, les autres aux lignes impaires, en concordance avec le système SECAM. Il s'agit alors d'une interpolation de 3 en 2 lignes dont la matrice de transformation Pc est la sous-matrice non nulle de $P_y$.

On peut, pour les signaux U et V, procéder à un traitement réducteur de redondance en tous points analogue à celui utilisé pour la luminance, mais portant cette fois sur des carrés de $(2 \times 2)$ points. En particulier, pour la transformation de Hadamard, on aurait

$$H_c = \frac{1}{\sqrt{2}} \begin{pmatrix} 1 & 1 \\ 1 & -1 \end{pmatrix}$$

et

$$H_c P_c = \sqrt{2} \begin{pmatrix} 1 & 1 & 1 \\ 1 & 0 & -1 \end{pmatrix}$$

On reconnaît la sous-matrice de $H_y P_y$.

Cette opération combinée d'interpolation verticale et transformation de Hadamard est effectuée par des processeurs PEU et PEV.

Sur la figure 2, on retrouve donc pour les signaux U et V à l'extrémité émettrice une structure tout à fait analogue à celle utilisée pour Y.

Dans le cadre de l'invention, on pourrait coder le signal composite plutôt que ses composantes séparées en utilisant, évidemment, une cadence d'échantillonnage suffisamment rapide. L'extrémité émettrice ne comprendrait alors qu'une structure du type de celle utilisée pour Y, comprenant les éléments ECY, MEY 1, MEY 2, PEY, M.

Considérons maintenant le groupe des 49 lignes non actives. Dans les systèmes à 625 lignes, sont réellement actives :
— la deuxième moitié de la ligne 23 et les lignes 24 à 310
— les lignes 336 à 622 et la première moitié de la ligne 623.

Par conséquent, dans le système selon l'invention, le groupe des 576 lignes actives est en réalité constitué de deux sous-groupes de 288 lignes s'étendant de la ligne 23 à la ligne 310 et de la ligne 336 à la ligne 623. Il s'ensuit que le groupe des lignes non actives est lui-même constitué de deux sous-groupes. Le premier sous-groupe comprend les lignes 624 et 625 d'une image et les lignes 1 à 22 de la suivante, soit au total 24 lignes. Le second sous-groupe comprend les lignes 311 à 335, soit 25 lignes.

L'utilisation qui peut être faite du temps correspondant à ces sous-groupes dans le cadre de l'invention dépend de la valeur de s, c'est-à-dire du nombre de lignes de signaux spéciaux qui peuvent être étendues en un bloc équivalent à 6 lignes ou sur une durée de $6 \times 64$ $\mu$s. Etant donné la spécification de l'Avis 472-1 du CCIR selon laquelle les signaux spéciaux doivent se trouver dans les lignes 16 à 21 et 329 à 334, il est avantageux, afin de rétablir la symétrie des deux sous-groupes quant à la position des lignes spéciales, de consacrer, selon l'invention, la ligne 311 à un mot de synchronisation pour la transmission numérique. Ce mot de synchronisation peut être engendré, par exemple à l'endroit du poste émetteur dans un générateur SYE qui peut être une mémoire morte dont la lecture est commandée sur l'intervention d'un signal de temps délivré par l'horloge. Dans ces conditions, il reste deux sous-groupes de 24 lignes non actives, dont 6 à partir de l'avant-dernière peuvent contenir des signaux spéciaux.

Le tableau ci-dessous reprend, dans la première colonne, la valeur de s, dans la seconde, le nombre de blocs de $6 \times 64$ $\mu$s nécessaire pour la transmission de 6 lignes de signaux spéciaux de vitesse réduite et dans la troisième, le nombre de tels blocs restant libres par sous-groupe, c'est-à-dire par trame :

s = 1 ; 6   ; impossible
s = 2 ; 3   ; 1
s = 3 ; 2   ; 2
s = 4 ; 1,5 ; 2,5

Les blocs restant libres peuvent être utilisés à d'autres fins. On peut notamment en faire usage pour transmettre le son. Pour ce faire, les signaux sonores analogiques sont appliqués à un échantillonneur ECS commandé à une cadence appropriée par l'horloge. En effet, un bloc correspond à $4 \times 464 = 1\,856$ échantillons de luminance, 928 échantillons de U et 928 échantillons de V, et l'on peut calculer qu'un bloc suffit à contenir tous les échantillons d'une voie monophonique ou stéréophonique de haute qualité (400 à 500 kbit/s) sur la durée d'une trame. Un bloc par trame suffit donc pour une telle voie, associée ou non au signal de télévision. On peut donc, selon l'invention, insérer une ou plusieurs voies sonores dans le groupe des lignes non actives, à concurrence du temps laissé libre par la transmission des signaux spéciaux. A cet effet, la cadence d'échantillonnage du son est commandée par l'horloge à une fréquence sous-multiple de $f_{sc}$ et enregistré pendant une trame dans une mémoire MS2 et émis en un bloc à travers le multiplexeur M (figure 2).

En ce qui concerne les signaux spéciaux, on pourrait envisager, dans l'équipement d'émission, de se servir des mémoires utilisées par les lignes actives. La position des lignes de signaux spéciaux à la fin des sous-groupes de lignes actives imposée par l'Avis 472-1 du CCIR ne favorise cependant pas cette solution, car les mémoires $MEY_1$ et $MEU_1$ et $MEV_1$ sont utilisées pour l'enregistrement des lignes actives pendant le premier bloc de celles-ci, tandis que toutes le sont dès le deuxième bloc et que $MEY_2$, $MEU_2$ et $MEV_2$ le sont encore pour le traitement du dernier bloc de lignes actives au début d'un sous-groupe de lignes non actives. En fait, la réutilisation de ces mémoires pour l'enregistrement des lignes de signaux spéciaux suivi immédiatemnt d'une émission à vitesse réduite n'est réalisable que pour s = 4.

Une utilisation plus rationnelle est cependant possible. C'est celle qui est représentée sur la figure 2. Elle consite à enregistrer les lignes de signaux spéciaux d'un sous-groupe de lignes non actives dans une mémoire supplémentaire $MS_1$ et de les émettre à vitesse de transmission à travers le multiplexeur M en fonction d'un signal de temps émis par l'horloge au cours du sous-groupe suivant, donc avec un retard d'une trame. Elles peuvent alors être étendues de façon arbitraire sur des blocs de ce sous-groupe, notamment sur les premiers. Cette disposition est favorable à l'extrémité réceptrice, ainsi qu'on le verra ci-après. On objectera qu'une telle inversion des contenus des lignes spéciales d'une trame à l'autre n'est pas souhaitable ; il suffit pour rétablir la situation, que l'extrémité réceptrice considère le mot de synchronisation (ligne 311) comme marquant le début du premier sous-groupe de lignes non actives (lignes 624, 625 et 1 à 22).

Enfin, il est clair que lorsque l'on ne doit pas transmettre de signaux spéciaux (signaux d'insertion), la totalité des quatre blocs de chaque sous-groupe de lignes non actives peut être affectée à la transmission de voies sonores ou de signaux numériques tels que le télétexte. Ceux-ci pourraient être directement appliquées à une entrée supplémentaire du multiplexeur M.

Le système selon l'invention est particulièrement favorable à la transmission de télétexte et d'informations similaires. En effet, par comparaison avec la télévision analogique, il permet de transmettre ces signaux pendant un plus grand nombre de lignes de l'intervalle de suppression de trame et à la vitesse de transmission élevée utilisée pour les signaux d'image. Le nombre de pages transmises serait ainsi multiplié par un facteur de 15 à 20.

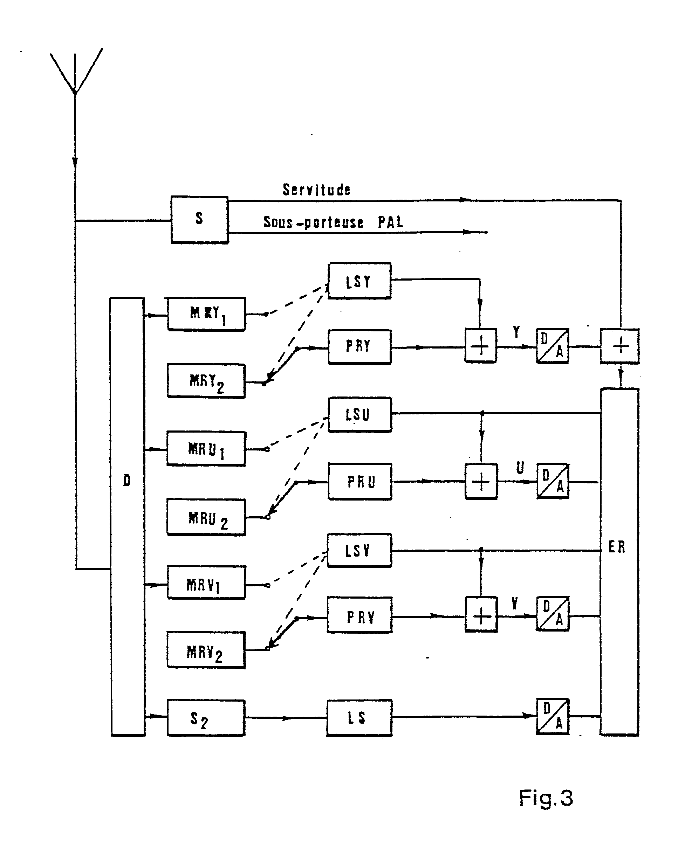

La figure 3 montre le schéma fonctionnel de l'extrémité réceptrice. Le signal reçu est appliqué à un organe de synchronisation S dont la fonction est de reconnaître le mot de synchronisation (ligne 311) et de reconstruire les signaux de servitude (impulsions de synchronisation et d'égalisation, salve de sous-porteuse). Au besoin, il reconstruit aussi la sous-porteuse PAL nécessaire pour une retransformation éventuelle en signal composite PAL. Il commande également le fonctionnement des organes de l'extrémité réceptrice. Le premier de ceux-ci est le démultiplexeur D. Pendant l'arrivée d'un paquet de 4 lignes du groupe des lignes actives, de durée $6 \times 44$ µs, les données entrantes sont rangées dans les mémoires $MRY_1$, $MRU_1$, $MRV_1$ tandis que les processeurs PRY, PRU et PRV opèrent, sur le bloc précédent rangé dans les mémoires $MRY_2$, $MRU_2$ et $MRV_2$, les opérations inverses de celles des processeurs d'émission. Les résultats apparaissent dans 6 intervalles disjoints de 53,2 µs. Dans l'hypothèse faite précédemment où les lignes de signaux spéciaux sont émises avec un retard d'une trame et au début des sous-groupes de lignes non actives elles peuvent être inscrites dès leur arrivée à vitesse réduite dans les mémoires $MRY_1$ à $MRV_2$ et lues à vitesse rapide par les lecteurs LSY, LSU et LSV, afin d'être superposées à Y, U et V dans les lignes prescrites par l'avis 472-1 du CCIR. Ceci n'est toutefois nécessaire que pour les signaux spéciaux que l'extrémité réceptrice désire réellement exploiter. Il en est de même pour les canaux sonores qui, arrivant en un bloc, sont rangés dans une mémoire $S_2$ dans laquelle ils sont lus à vitesse lente par un lecteur LS du son. D'éventuels signaux de télétexte seraient disponibles à une sortie supplémentaire du démultiplexeur D. Les différents signaux Y, U, V et les signaux de servitude ainsi que les signaux sonores traversent des transformateurs numériques/analogiques D/A et sont appliqués, par exemple, à un équipement ER comprenant un écran récepteur, selon un ordre temporel déterminé par les signaux de servitude.

On voit que l'ensemble du système selon l'invention permet une réalisation fort simple de l'extrémité réceptrice, ce qui favorise une extension des liaisons numériques jusque chez le téléspectateur. En particulier, les calculs effectués par les processeurs de réception sont très simples. En ce qui concerne ceux-ci, on peut faire remarquer qu'ils comprennent une multiplication matricielle qui devrait, idéalement, restituer l'information initiale en blocs de 6 lignes pour la luminance Y et de 3 lignes pour U et V. Il faut toutefois noter que, si les matrices $H_y$ et $H_c$ ont toujours un inverse (elles-mêmes dans le cas de la transformation de Hadamard), il n'existe pas de matrices de genre $6 \times 4$ et $3 \times 2$ opérant exactement l'inverse de $P_y$ et $P_c$, respectivement. Cela n'a rien d'étonnant et exprime le fait que l'interpolation verticale entraîne inéluctablement une perte de définition verticale. La retransformation de blocs de 4 lignes de luminance en blocs de 6 lignes se fait par multiplication par la matrice (non normée).

(voir dessin page 9)

$$Q_y = \begin{pmatrix} 2 & 0 & 0 & 0 \\ 1 & 1 & 0 & 0 \\ 0 & 2 & 0 & 0 \\ \hline 0 & 0 & 2 & 0 \\ 0 & 0 & 1 & 1 \\ 0 & 0 & 0 & 2 \end{pmatrix} = \begin{pmatrix} Q_c & 0 \\ \hline 0 & Q_c \end{pmatrix}$$

où la subdivision en sous-matrices de genre $3 \times 2$ fait apparaître la matrice $Q_c$ à utiliser pour U et V. On peut remarquer que si l'on utilise pour le traitement réducteur de redondance la transformation de Hadamard, l'opération du processeur PRY revient à la multiplication par

$$Q_y H_y = \begin{pmatrix} 1 & 1 & 1 & 1 \\ 1 & 0 & 1 & 0 \\ 1 & -1 & 1 & -1 \\ \hline 1 & 1 & -1 & -1 \\ 1 & 0 & -1 & 0 \\ 1 & -1 & -1 & 1 \end{pmatrix}$$

et est donc très simple. Il en est de même de celle des processeurs PRU et PRV qui reviennent à la multiplication par

$$Q_c H_c = \frac{1}{\sqrt{2}} \begin{pmatrix} 1 & 1 \\ 1 & 0 \\ 1 & -1 \end{pmatrix}$$

Enfin, la perte de définition verticale due à l'interpolation se retrouve exprimée dans le produit

$$Q_y P_y = \begin{pmatrix} 2 & 1 & 0 & 0 & 0 & 0 \\ 1 & 1 & 1 & 0 & 0 & 0 \\ 0 & 1 & 2 & 0 & 0 & 0 \\ \hline 0 & 0 & 0 & 2 & 1 & 0 \\ 0 & 0 & 0 & 1 & 1 & 1 \\ 0 & 0 & 0 & 0 & 1 & 2 \end{pmatrix} = \begin{pmatrix} Q_c P_c & 0 \\ \hline 0 & Q_c P_c \end{pmatrix}$$

## Revendications

1. Procédé de transmission de signaux de télévision par l'intermédiaire d'un codage numérique de ces signaux dans lequel les signaux de télévision analogiques originaux sont constitués par des signaux de lignes, de trames et d'images dont chacun comprend des parties consacrées à des signaux de servitude tels des impulsions de synchronisation et d'égalisation et des salves de sous-porteuse de couleur et des parties actives consacrées à l'information d'image proprement dite, le codage numérique des signaux de télévision étant réalisé à la cadence d'une fréquence d'échantillonnage, codage et cadence pouvant être différents pour les signaux des composants de luminance et des composants de différence de couleur, caractérisé en ce qu'on subdivise les lignes de signaux de télévision originaux comprenant l'information d'image proprement dite en blocs initiaux de lignes consécutives chacun d'un nombre m prédéterminé de lignes qu'on opère une interpolation verticale sur l'information d'image codée des m lignes de chaque bloc pour en déduire des blocs de lignes résultantes dont le nombre n de lignes est inférieur au nombre m de lignes des blocs initiaux, qu'on transmet l'information d'image codée de ces n lignes résultantes, étalées sur les temps totaux initialement réservés aux blocs de m lignes, et qu'on reconstitue, à la réception, une information d'image répartie sur des blocs d'un nombre m de lignes égal à celui des blocs initiaux.

2. Procédé de transmission suivant la revendication 1, caractérisé en ce que, à l'émission, simultanément avec, ou consécutivement à l'interpolation verticale, l'information d'image codée est soumise à un traitement réducteur de redondance réduisant un nombre p de bits en un nombre plus petit de q bits et en ce qu'à la réception, l'information transmise est soumise à un traitement inverse qui restitue l'information d'image codée originale.

3. Procédé suivant une des revendications précédentes, caractérisé en ce que les parties consacrées

9

aux signaux de servitude sont localisées dans un ensemble de lignes sans information d'image proprement dite et sont émis dans des lignes au début de la trame suivante et étalés sur un temps équivalent à la durée d'au moins un bloc initial de m lignes.

4. Procédé suivant une des revendications précédentes, caractérisé en ce que pour les signaux de luminance, on choisit la taille des blocs initiaux de lignes m = 6 à réduire à un nombre de lignes n = 4, m et n étant divisé par deux pour les signaux de différence de couleur, m et n pouvant être multipliés par un même nombre entier.

5. Procédé suivant une des revendications 1 à 3, caractérisé en ce que pour les signaux de luminance, on choisit la taille des blocs initiaux de lignes m = 8 à réduire à un nombre de lignes n = 6, m et n étant divisés par deux pour les signaux de différence de couleur, m et n pouvant être multipliés par un même nombre entier.

6. Procédé suivant une des revendications 2, 3, 4 ou 5 caractérisé en ce que le nombre réduit de lignes n, le nombre p de bits avant et le nombre q de bits après le traitement de réduction de redondance obéissent à la condition .

$$n\,q = s\,p,$$

s étant un ensemble consécutif de s lignes de signaux spéciaux, non soumis au traitement de redondance.

7. Procédé suivant une des revendications précédentes, caractérisé en ce que des signaux sonores relatifs à une trame ou une image, ou d'autres signaux tels que de télétexte, sont localisés dans un ou plusieurs blocs initiaux de m lignes ne contenant que des signaux de servitude.

8. Installation pour la réalisation du procédé suivant une des revendications précédentes, caractérisée en ce qu'à l'émission des signaux de télévision sous forme numérique (Y, U, V) appartenant à m lignes consécutives renfermant l'information d'image proprement dite sont envoyés à l'entrée d'une mémoire ou d'un groupe de mémoires ($MEY_1$, $MEU_1$, $MEV_1$ ou $MEY_2$, $MEU_2$, $MEV_2$), en ce que le contenu d'une autre mémoire ou d'un autre groupe de mémoire ($MEY_2$, $MEU_2$, $MEV_2$ ou $MEY_1$, $MEU_1$, $MEV_1$) représentant l'information d'image proprement dite enregistrée préalablement est lu par un microprocesseur ou un groupe de microprocesseurs (PEY, PEU, PEV) opérant une interpolation verticale, réduisant l'information relative à m lignes en une information relative à n lignes, en ce que les signaux de sortie du ou des microprocesseurs (PEY, PEU, PEV) ainsi que d'autres signaux non transformés sont appliqués à un multiplexeur (M) émetteur et en ce que un dispositif commutateur modifie les connexions et intervertit les fonctions des mémoires ou groupes de mémoires ($MEY_1$, $MEU_1$, $MEV_1$) et $MEY_2$, $MEU_2$, $MEV_2$) chaque fois après l'enregistrement de m lignes dans les mémoires ($MEY_1$, $MEU_1$, $MEV_1$ ou $MEY_2$, $MEU_2$, $MEV_2$).

9. Installation pour la réalisation du procédé suivant une des revendications 1 à 6, caractérisée en ce qu'à la réception un démultiplexeur récepteur fournit à une mémoire ou un groupe de mémoires ($MRY_1$, $MRU_1$, $MRV_1$ ou $MRY_2$, $MRU_2$, $MRV_2$) une information relative à n lignes consécutives de signaux de télévision relatifs à de l'information d'image proprement dite, en ce qu'une autre mémoire ou un autre groupe de mémoires ($MRY_2$, $MRU_2$, $MRV_2$ ou $MRY_1$, $MRU_1$, $MRV_2$) est lu par un microprocesseur ou un groupe de microprocesseurs (PRY, PRU, PRV) opérant une extrapolation verticale étalant l'information relative à n lignes en une information relative à m lignes, en ce que les signaux de sortie des microprocesseurs (PRY, PRU, PRV) et d'autres signaux non déformés sont transformés en signaux de télévision analogiques conventionnels et en ce qu'un dispositif de commutation modifie les connexions et intervertit les fonctions des mémoires ou groupes de mémoires ($MRY_1$, $MRU_1$, $MRV_1$ et $MRY_2$, $MRU_2$, $MRV_2$) chaque fois après enregistrement de n lignes dans les mémoires ($MRY_1$, $MRU_1$, $MRV_1$ ou $MRY_2$, $MRU_2$, $MRV_2$).

10. Installation suivant la revendication 8, caractérisée en ce que les microprocesseurs (PEY, PEU, PEV) opèrent simultanément avec l'interpolation verticale une réduction de redondance et en ce que les microprocesseurs (PRY, PRU, PRV) opèrent simultanément avec l'extrapolation verticale une restitution dans sa forme originale du signal réduit dans les microprocesseurs (PEY, PEU, PEV).

## Claims

1. Method for transmitting television signals by means of a digital encoding of these signals, wherein the original analog television signals are constituted by picture, frame and line signals of which each comprises portions allotted to service signals such as equalisation and synchronisation pulses, and groups of colour subcarriers, and active portions allotted to the picture information proper, the digital encoding of the television signals being effected at the rate of a sampling, encoding and rate frequency which may differ for the brightness components signals and the colour difference components signals, characterised in that the lines of original television signals comprising the picture information proper are subdivided into initial blocks of consecutive lines, each block being of a predetermined number m of lines, that vertical interpolation is carried out on the encoded picture information of the m lines of each block for deriving therefrom blocks of resultant lines whereof the number n of lines is lower than the number m of lines of the initial blocks, that the encoded picture information of these resultant lines spread over the total times initially reserved for the blocks of m lines is transmitted, and that, at reception, picture information is reconstituted which is distributed over blocks of a number m of lines which is equal to that of the initial blocks.

2. Transmission method according to claim 1, characterised in that, at transmission, simultaneously with or consecutively to the vertical interpolation the encoded picture information is subjected to a redundancy reduction treatment reducing a number p of bits to a smaller number q of bits, and that, at reception, the transmitted information is subjected to an inverse treatment which restores the original encoded picture information.

3. Method according to one of the preceding claims, characterised in that the portions allotted to service signals are located in a set of lines without picture information proper, and are transmitted in lines at the start of the following frame and spread over a time equivalent to the duration of at least an initial block of m lines.

4. Method according to one of the preceding claims, characterised in that for the brightness signals the form chosen is initial blocks of lines m = 6 to be reduced to a number of lines n = 4, m and n being divided by two for the colour difference signals, m and n being multipliable by one and the same whole number.

5. Method according to one of claims 1 to 3, characterised in that for the brightness signals the form chosen is initial blocks of lines m = 8 to be reduced to a number of lines·n = 6, m and n being divided by two for the colour difference signals, m and n being multipliable by one and the same whole number.

6. Method according to one of claims 2, 3, 4 or 5, characterised in that the reduced number of lines n, the number p of bits before and the number q of bits after the redundancy reduction treatment satisfy the expression

$$n\,q = s\,p,$$

s being a consecutive set of s lines of special signals, not subjected to the redundancy treatment.

7. Method according to one of the preceding claims, characterised in that sound signals relating to a frame or a picture, or other signals such as teletext signals, are located in one or more initial blocks of m lines containing only service signals.

8. Installation for carrying out the method according to one of the preceding claims, characterised in that, at transmission, television signals in digital form (Y, U, V) belonging to m consecutive lines containing the picture information proper are sent to the input of a store or a group of stores ($MEY_1$, $MEU_1$, $MEV_1$ or $MEY_2$, $MEU_2$, $MEV_2$), in that the contents of another store or another group of stores ($MEY_2$, $MEU_2$, $MEV_2$ or $MEY_1$, $MEU_1$, $MEV_1$) representing the picture information proper recorded previously are read by a microprocessor or a group of microprocessors (PEY, PEU, PEV) carrying out a vertical interpolation operation, reducing the information relating to m lines to information relating to n lines, in that the output signals of the microprocessor or microprocessors (PEY, PEU, PEV) and also other non-transformed signals are applied to a transmitting multiplexer (M) and in that a switching device modifies the connections and changes-over the functions of the stores or groups of stores ($MEY_1$, $MEU_1$, $MEV_1$ and $MEY_2$, $MEU_2$, $MEV_2$) each time after the recording of m lines in the stores ($MEY_1$, $MEU_1$, $MEV_1$ or $MEY_2$, $MEU_2$, $MEV_2$).

9. Installation for carrying out the method according to one of claims 1 to 6, characterised in that at reception a receiving demultiplexer supplies to a store or a group of stores ($MRY_1$, $MRU_1$, $MRV_1$ or $MRY_2$, $MRU_2$, $MRV_2$) information relating to n consecutive lines of television signals relating to picture information proper, in that another store or group of stores ($MRY_2$, $MRU_2$, $MRV_2$ or $MRY_1$, $MRU_1$, $MRV_1$) is read by a microprocessor or a group of microprocessors (PRY, PRU, PRV) effecting a vertical extrapolation spreading the information relating to n lines into information relating to m lines, in that the output signals of the microprocessors (PRY, PRU, PRV) and other non-deformed signals are transformed into conventional analog television signals, and in that a switching device modifies the connections and changes-over the functions of the stores or groups of stores ($MRY_1$, $MRU_1$, $MRV_1$ and $MRY_2$, $MRU_2$, $MRV_2$) each time after recording of n lines in the stores ($MRY_1$, $MRU_1$, $MRV_1$ or $MRY_2$, $MRU_2$, $MRV_2$).

10. Installation according to claim 8, characterised in that the microprocessors (PEY, PEU, PEV) effect simultaneously with the vertical interpolation a redundancy reduction and in that the microprocessors (PRY, PRU, PRV) carry out simultaneously with the vertical extrapolation a restoring to its original form of the signal reduced in the microprocessors (PEY, PEU, PEV).

**Patentansprüche**

1. Verfahren zur Übertragung von Fernsehsignalen mittels einer digitalen Codierung dieser Signale, bei dem die ursprünglichen analogen Fernsehsignale aus Zeilen-, Teilbild- und Bildsignalen bestehen, von denen jedes Teile aufweist, die für Steuersignale, wie Synchronisations- und Entzerrungsimpulse und Farbhilfsträger-Folgen bestimmt sind, und außerdem wirksame Teile aufweist, die für die eigentliche Bildinformation bestimmt sind, wobei die digitale Codierung der Fernsehsignale entsprechend dem Takt einer Abtastfrequenz verwirklicht wird, und Codierung und Takt für die Signale der Leuchtdichte-Komponenten und der Farbabstands-Komponenten verschieden sein können, dadurch gekennzeichnet, daß die Zeilen der ursprünglichen Fernsehsignale die eigentliche Bildinformation in anfänglichen Blöcken aus aufeinanderfolgenden Zeilen enthalten, wobei jeder Block eine vorgegebene Zeilenzahl m aufweist, daß bei der codierten Bildinformation der m Zeilen jedes Blocks eine vertikale Interpolation ausgeführt wird, um daraus Blöcke mit resultierenden Zeilen abzuleiten, deren Zeilenzahl n kleiner als die Zeilenzahl m der anfänglichen Zeilenblöcke ist, daß die codierte Bildinformation dieser n resultierenden Zeilen, bei Aufteilung auf die Gesamtzeit, die ursprünglich für die Blöcke mit m Zeilen vorgesehen war, übertragen wird, und daß beim Empfang eine Bildinformation rekonstruiert wird die auf Blöcke mit einer Zeilenzahl m wie bei den anfänglichen Blöcken aufgeteilt ist.

2. Übertragungsverfahren gemäß Anspruch 1, dadurch gekennzeichnet, daß bei der Sendung die codierte Bildinformation gleichzeitig mit der vertikalen Interpolation, oder im Anschluß an die vertikale Interpolation, einer Verarbeitung zur Reduzierung der Redundanz unterworfen wird, bei der eine Bitzahl p in eine kleinere Bitzahl q umgewandelt wird, und daß beim Empfang die übertragene Information einer umgekehrten Verarbeitung unterworfen wird, bei der die ursprüngliche, codierte Bildinformation rekonstruiert wird.

3. Verfahren gemäß einem der vorhergehenden Patentansprüche, dadurch gekennzeichnet, daß die Teile, die für die Steuersignale bestimmt sind, in einer Gruppe von Zeilen ohne eigentliche Bildinformation angeordnet sind und zu Beginn des folgenden Teilbildes übertragen werden und auf eine Zeit aufgeteilt werden, die mindestens der Dauer eines anfänglichen Blocks aus m Zeilen entspricht.

4. Verfahren gemäß einem der vorhergehenden Ansprüche, dadurch gekennzeichnet, daß für die Leuchtdichtesignale anfängliche Blöcke mit m = 6 Zeilen gewählt werden, die in Blöcke mit n = 4 Zeilen umzuwandeln sind, wobei m und n für die Farbabstandssignale durch zwei dividiert werden, und m und n mit derselben ganzen Zahl multipliziert werden können.

5. Verfahren gemäß einem der Ansprüche 1 bis 3, dadurch gekennzeichnet, daß für die Leuchtdichtesignale anfängliche Blöcke mit m = 8 Zeilen gewählt werden, die in Blöcke mit n = 6 Zeilen umzuwandeln sind, wobei m und n für die Farbabstandssignale durch zwei geteilt werden, und m und n mit derselben ganzen Zahl multipliziert werden können.

6. Verfahren gemäß einem der Ansprüche 2, 3, 4 oder 5, dadurch gekennzeichnet, daß die reduzierte Zeilenzahl n, die Bitzahl p vor, und die Bitzahl q nach der Verarbeitung zur Reduzierung der Redundanz die Bedingung

$$n\,q = s\,p$$

erfüllen, wobei s die Zeilenzahl einer zusammenhängenden Gruppe mit speziellen Signalen ist, die nicht der Redundanz-verarbeitung unterworfen werden.

7. Verfahren gemäß einem der vorhergehenden Ansprüche, dadurch gekennzeichnet, daß Tonsignale für eine Teilbild oder ein Bild, oder andere Signale, wie zum Beispiel Bildschirmtext, in einem oder mehreren anfänglichen Blöcken mit m Zeilen untergebracht sind, die nur Steuersignale enthalten.

8. Anlage zur Verwirklichung des Verfahrens gemäß einem der vorhergehenden Ansprüche, dadurch gekennzeichnet, daß bei der Sendung Fernsehsignale in digitaler Form (Y, U, V), die zu m aufeinanderfolgenden Zeilen gehören, die die eigentliche Bildinformation enthalten, auf den Eingang eines Speichers oder einer Gruppe von Speichern ($MEY_1$, $MEU_1$, $MEV_1$ oder $MEY_2$, $MEU_2$, $MEV_2$) gegeben werden, daß der Inhalt eines anderen Speichers oder einer anderen Gruppe von Speichern ($MEY_2$, $MEU_2$, $MEV_2$ oder $MEY_1$, $MEU_1$, $MEV_1$), der die vorher gespeicherte eigentliche Bildinformation repräsentiert, von einem Mikroprozessor oder einer Gruppe von Mikroprozessoren (PEY, PEU, PEV) gelesen wird, die eine vertikale Interpolation ausführen, wobei die Information mit m Zeilen in eine Information mit n Zeilen umgewandelt wird, daß die Ausgangssignale des oder der Mikroprozessoren (PEY, PEU, PEV), sowie andere, nicht umgewandelte Signale auf einen Sendemultiplexer (M) gegeben werden, und daß eine Umschaltvorrichtung nach jeder Speicherung von m Zeilen in den Speichern ($MEY_1$, $MEU_1$, $MEV_1$ oder $MEY_2$, $MEU_2$, $MEV_2$) die Verbindungen ändert und die Funktionen der Speicher oder Gruppen von Speichern ($MEY_1$, $MEU_1$, $MEV_1$ und $MEY_2$, $MEU_2$, $MEV_2$) vertauscht.

9. Anlage zur Verwirklichung des Verfahrens gemäß einem der Ansprüche 1 bis 6, dadurch gekennzeichnet, daß beim Empfang ein Empfangsdemultiplexer eine Information mit n aufeinanderfolgenden Zeilen über Fernsehsignale mit eigentlicher Bildinformation an einen Speicher oder eine Gruppe von Speichern ($MRY_1$, $MRU_1$, $MRV_1$ oder $MRY_2$, $MRU_2$, $MRV_2$) liefert, daß ein anderer Speicher oder eine andere Gruppe von Speichern ($MRY_2$, $MRU_2$, $MRV_2$ oder $MRY_1$, $MRU_1$, $MRV_1$) von einem Mikroprozessor oder einer Gruppe von Mikroprozessoren (PRY, PRU, PRV) gelsen wird, die eine vertikale Extrapolation ausführen, wobei sie die Information mit n Zeilen in eine Information mit m Zeilen umwandeln, daß die Ausgangssignale der Mikroprozessoren (PRY, PRU, PRV) und andere, nicht verformte Signale in konventionelle analoge Fernsehsignale umgewandelt werden, und daß eine Umschaltvorrichtung nach jeder Speicherung von n Zeilen in den Speichern ($MRY_1$, $MRU_1$, $MRV_1$ oder $MRY_2$, $MRU_2$, $MRV_2$) die Verbindungen ändert und die Funktionen der Speicher oder Gruppen von Speichern ($MRY_1$, $MRU_1$, $MRV_1$ und $MRY_2$, $MRU_2$, $MRV_2$) vertauscht.

10. Anlage gemäß Anspruch 8, dadurch gekennzeichnet, daß die Mikroprozessoren (PEY, PEU, PEV) gleichzeitig mit der vertikalen Interpolation eine Redundanzreduzierung ausführen, und daß die Mikroprozessoren (PRY, PRU, PRV) gleichzeitig mit der vertikalen Extrapolation eine Wiederherstellung der ursprünglichen Form des in den Mikroprozessoren (PEY, PEU, PEV) umgewandelten Signals bewirken.

Fig.1

Fig.2

Fig.3